# EUROPEAN PATENT SPECIFICATION

(11) **EP 3 961 620 B1**
(45) Date of publication and mention of the grant of the patent: **28.01.2026**
(21) Application number: 20193512.9
(22) Date of filing: 30.08.2020
(51) Int. Cl.: G10L 15/30, G10L 15/22

(54) **SYSTEM AND METHOD FOR VOICE CONTROL OF AN INTELLIGENT BUILDING**
SYSTEM UND VERFAHREN ZUR SPRACHSTEUERUNG EINES INTELLIGENTEN GEBÄUDES
SYSTÈME ET PROCÉDÉ DE COMMANDE VOCALE D'UN BÂTIMENT INTELLIGENT

(30) Priority: 27.08.2020 PL 43511420
(43) Date of publication of application: 02.03.2022
(73) Proprietor: Vemmio Spólka Z Ograniczona Odpowiedzialnoscia, 40-778 Katowice (PL)
(72) Inventor: Borówka, Maciej, 40-748 Katowice (PL); Ko osowski, Artur, 42-500 B dzin (PL); Dziekan, Wojciech, 42-440 Mokrus (PL); Wid ok, Maciej, 43-100 Tychy (PL); Ga ka, Jakub, 31-621 Kraków (PL)
(74) Representative: Wroblewski, Marcin Jan

(56) References cited:
- US-A1- 2013 029 684
- US-A1- 2019 166 424
- US-B1- 10 521 185
- LUIS E PALAFOX ET AL: "Wireless Sensor Networks for Voice Capture in Ubiquitous Home Environments", WIRELESS PERVASIVE COMPUTING, 2009. ISWPC 2009. 4TH INTERNATIONAL SYMPOSIUM ON, IEEE, PISCATAWAY, NJ, USA, 11 February 2009 (2009-02-11), pages 1 - 5, XP031436744, ISBN: 978-1-4244-2965-3

## Description

### Technical field

The object of the invention is system and method for voice control of an intelligent building.

### Background of the invention

From prior art there are known solutions for controlling an intelligent building by means of speech. They enable the user's interaction with the system of an intelligent building by issuing voice commands, such as, e.g. "open the door", "turn off the light", "turn on the light", "turn on the fan", etc., triggering specific functionalities of the system of an intelligent building. In these systems, the recording of a speech signal comprising voice commands is realised by a single device, constituting a single point of voice interaction with the user. They are usually solutions of the smart-speaker type, e.g. Google Home.

In solutions of voice interaction points known from prior art, the spatial context defined as the ability to locate the source of the speech signal, and therefore to locate the user, is limited to determining the direction and distance of the user relative to the device, usually by using a circular microphone array.

In known solutions, local reduction of acoustic interference is each time based on a single device provided with a directional (usually circular) microphone array and an algorithm of forming a speech signal detecting beam, as well as the use of adaptive background noise reduction in the recorded sample of speech signal comprising a voice command.

There are known systems of an intelligent building with biometric authentication based on speech signal, which use only voice information (speech signal samples) for authentication of the user's voice command without taking into account the spatial context, including not taking into account the user's location.

Known solutions are also characterised by the lack of cooperation between numerous devices of an intelligent building provided with a point of voice interaction with the user in terms of improving the quality of recorded speech signals, as well as locating the devices and the source of speech. In addition, in the case of installing multiple devices, in current solutions there is a need for manual configuration and calibration of devices with respect to their cooperation for reducing interference or locating the sources.

US patent application US2013029684A1 discloses a sensor network system including node devices connected in a network via predetermined propagation paths that collects data measured at each node device to be aggregated into one base station via a time-synchronized sensor network system. The base station calculates a position of the signal source based on the angle estimation value of the signal from each node device and position information thereof, designates a node device located nearest to the signal source as a cluster head node device, and transmits information of the position of the signal source and the designated cluster head node device to each node device, to cluster each node device located within the number of hops from the cluster head node device as a node device belonging to each cluster. Each node device performs an emphasizing process on the received signal from the signal source, and transmits an emphasized signal to the base station.

US patent US10521185B1 discloses a user interface device for an intelligent automated assistant service that uses a plurality of audio data paths that can be selectively switched to operate in a privacy mode. There is provided a first audio data input path between the audio input subsystem and an internal buffer; a first audio data output path between the internal buffer and the first communications subsystem; a second audio data output path between the internal buffer and the second communications subsystem; and a first audio data bypass path between the audio input subsystem and the second communications subsystem. In a first state, the first audio data input path directs audio data to the internal buffer, and to the first and second audio data output paths. In a second state, the first audio data input path is terminated and audio data is directed to the second communications subsystem on the first audio data bypass path.

US patent application US2019166424A1 discloses systems and methods for operating a microphone mesh network. In one embodiment, a method includes connecting, via a device comprising a processor, to one or more active microphones in an area via a network; instructing, via the device, one or more selected microphones of the one or more active microphones to capture audio from an acoustic source; and receiving, via the device, the audio from the one or more selected microphones as input to one or more applications.

A paper entitled "Wireless Sensor Networks for Voice Capture in Ubiquitous Home Environments" [Luis E. Palafox and J. Antonio Garc'ia-Macias, CICESE - Research Center, Computer Science Department, Km. 107 Carretera Tijuana-Ensenada C.P. 22860] discloses a voice capture application using a wireless sensor network wherein the integration of a capture technique specifically designed for hierarchical wireless sensor networks is used. The results of experiments described in the paper showed that presented approach consumes less energy than the traditional capture and send approach. Additionally, the technique provides basic security services such as authentication and confidentiality for control messages without incurring in additional energy consumption.

### Disadvantages of prior art

Solutions for controlling an intelligent building by means of speech known from prior art have a number of inconveniences.

These solutions are characterised by a limited detecting range of a single device constituting a single point of voice interaction with the user, which has a considerable impact on the sensitivity of the entire system to voice commands and its susceptibility to acoustic interference, such as noise or reverberation.

Directional information generated by known solutions has limited usability due to its limited range resulting from the use of single points for voice interaction with the user, which translates into limited capabilities of locating the user and system devices.

Local reduction of interference results in limited possibilities of reducing omnidirectional interference, and it has low efficiency in reverberant environments.

Due to the use of just the speech signal for biometric detection, in known solutions there are diminished capabilities of biometric authentication, which can result in increasing the rate of errors (false rejections of user commands and their false approvals), especially in the presence of external interference.

The lack of cooperation between numerous devices of an intelligent home provided with a point of voice interaction with the user results in limiting the range, the sensitivity of the devices, and limiting the noise reduction capabilities, as well as limiting resistance to interference.

The need for manual configuration and calibration of devices in the existing systems implies a huge technical barrier for the input of users and a considerable reduction in the user's experience. It is also an area of the occurrence of a potentially large number of users' errors related to the installation and operation of the system.

It is therefore desirable to develop a system which would be free of the abovementioned inconveniences and would solve the problem of automatic configuration of elements in a voice control system and their continuous updating. This system should provide resistance of voice control to acoustic interference and external noise, as well as the recording and processing of voice commands with simultaneous biometric verification of identity with no need for the initial collection of the users' speech samples. The system is also intended to solve the problem of acquiring information including relative location of the elements (stations) of the system and the users.

### Summary of the invention

The object of the invention is a system for voice control of an intelligent building with biometric user authentication, comprising at least one base station and at least one satellite station adjusted to communicate with the at least one base station. The base station comprises a base station power supply, a base station microprocessor, base station memory, a base station microphone array, a base station radio interface and an external network interface. The satellite station comprises a satellite station power supply, a satellite station microprocessor, satellite station memory, a satellite station microphone array and a satellite station radio interface. The system also comprises a server of biometric voice services adjusted to communicate with the at least one base station via an IT network. The system according to the invention is characterised in that each one of the microphone arrays comprises at least one microphone adjusted to listen for the speech signal of the user in order to trigger the activation of the microphone arrays and subsequently record the speech signal of the user by them, and all the base stations and satellite stations have mutually synchronised clocks. The system is configured to determine the relative location of the user compared to all the stations, using simultaneous collecting of speech sample recordings of the user in all stations. The system is further configured to estimate the relative location of the stations based on at least two speech sample recordings of the user in different locations.

Preferably, the system according to the invention comprises between 3 and 10 base stations.

Preferably, each base station is connected to between 3 and 10 satellite stations.

The invention also relates to a method for voice control of an intelligent building with biometric authentication of the user, comprising the following steps. Activation of detecting for a speech signal of the user, followed by detection of the speech signal of the user by means of single microphones of all stations and, in the case of detecting a speech signal, advancing to the next step, and, in the case of failing to detect a speech signal, returning to the previous step. The speech signal of the user is then recorded by means of the microphone array of each station which has detected the speech signals in at least two different locations, and acoustic beams are formed in sequence with simultaneous extraction of acoustic signal from the speech signals of the user. This is followed by transmitting the signals from the preceding step to the base station, if they were generated in the satellite station; otherwise, this step is omitted, Subsequently, the signals from the preceding step are received and transmitted to the server of biometric voice services, where delays and relative locations of the stations and the user are determined. The next step involves performing the aggregation, enhancement and detection of the signal of an activation password and a voice command based on acoustic signals from all stations, and subsequent recognition of the activation password. If the activation password has been recognised correctly, the method advances to the next step; if not, it returns to the first step. Subsequently, the activation password is verified in a biometric manner and the voice command is analysed, and the voice command is forwarded for execution along with contextual information on the location of the user and the stations.

### Advantages of the invention

The system according to the invention is characterised by easy installation of its elements by users, with no need for its manual calibration and configuration. It ensures high efficiency of operation defined as minimising the rate of errors (false rejections of the user's commands and their false approvals), particularly in the presence of external interference. High sensitivity and performance of the system is provided by quality control mechanisms for the recorded speech signal, as well as by its separation and the reduction of interference from the surroundings.

The invention allows recording the activation password and voice command by means of scattered stations, which increases the operating range of the system and increases resistance to local interference. The use of numerous stations cooperating in terms of processing the recorded speech signals attributes to an improvement in the quality of the recorded signal, which increases efficiency and usefulness of the system of voice control and biometric verification of the user, considerably contributing to an improvement in the user's experience and reliability of voice control.

The system provides extraction of additional information on the relative location of the stations and the users, and because of it, it provides a contextual spatial layer of interaction, which positively influences an increase in the intelligence of the system and enables the introduction of new functionalities of an intelligent building related to the user's typical location, momentary or determined over time. Determination of the relative location of the stations and location of the user by the system is realised automatically, with no need for manual configuration, which increases the comfort of usage, increases the simplicity of installation, reduces the risk of error during installation and configuration, ensures automated maintenance of the current configuration of the system and thus increases its resistance to changes in the setting of the station. The use of a user location mechanism and its combination with the information on voice command and with biometric data allows the creation of a hybrid, multimodal user authentication model comprising voice biometry, behavioural biometry related to the location and related to preferences. The use of such a model increases the safety and comfort of using the system by reducing the number of false authorising decisions and better predictive profiling of the user's expectations due to their better identification and consideration of the spatial context.

The system enables profiling of the action of functionality in an intelligent building according to the detected identity of the user and the ability to secure and protect access to selected functions (e.g. changes in heating settings) by automatic biometric voice authentication of the user's voice commands supported by behavioural authentication and information on the location of stations and the user, also considered to be behavioural biometric information.

The primary advantage of the invention involves an increase in the autonomy and credibility of operation of an intelligent building system due to the ability to use the solution of a multilingual voice assistant based on the presented equipment infrastructure of the invention.

The advantage of the system based on a base station and a group of satellite stations also involves reduction of the costs of such a system while retaining the advantages of a multi-element solution. The presence of numerous satellite stations improves the reliability of the solution. In case of damage or power failure in one or several satellite stations, the system can still serve the user efficiently due to the presence of the remaining satellite stations.

### Description of the drawings

The object of the invention is shown in the embodiments in a drawing, in which:
Fig. 1 presents schematically a system for voice control of an intelligent building with biometric authentication of the user;
Fig. 2 presents schematically a single base station of the system for voice control of an intelligent building with biometric authentication of the user;
Fig. 3 presents schematically a single satellite station of the system for voice control of an intelligent building with biometric authentication of the user;
Fig. 4 presents a method for voice control of an intelligent building with biometric authentication of the user.

### Embodiments of the invention

### Embodiment 1

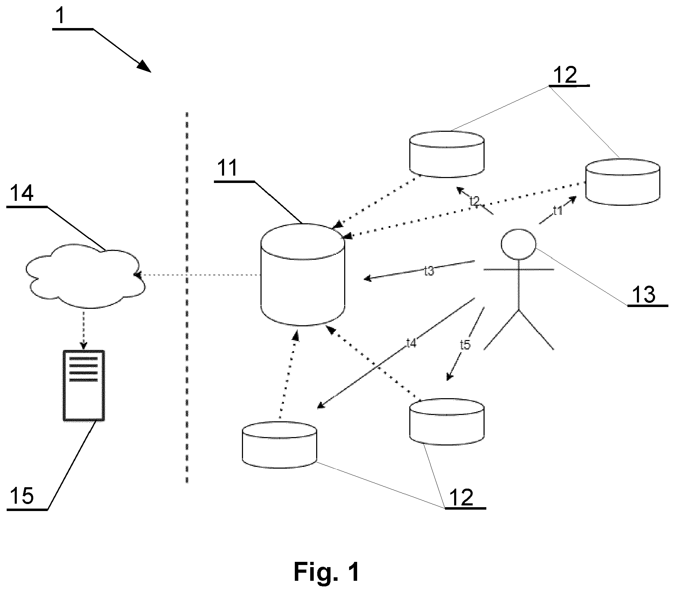

Fig. 1 presents the system 1 for voice control of an intelligent building with biometric authentication of the user comprising one base station 11 and five satellite stations 12. The satellite stations 12 communicate with the base station 11 by means of a Zig Bee radio interface (IEEE 802.15.4). The system comprises a server of biometric voice services 15, which communicates with the base station 11 by means of the Internet 14 via a local WIFI connection to a wireless router installed in the intelligent building.

The arrows t1-t5 indicate recording of speech signal of the user 13, delayed depending on the distance of the user from the given station; dotted arrows indicate the transmission of data comprising a voice command between stations of the system, as well as between the base station 11 and the server of voice services 15 available via the Internet 14.

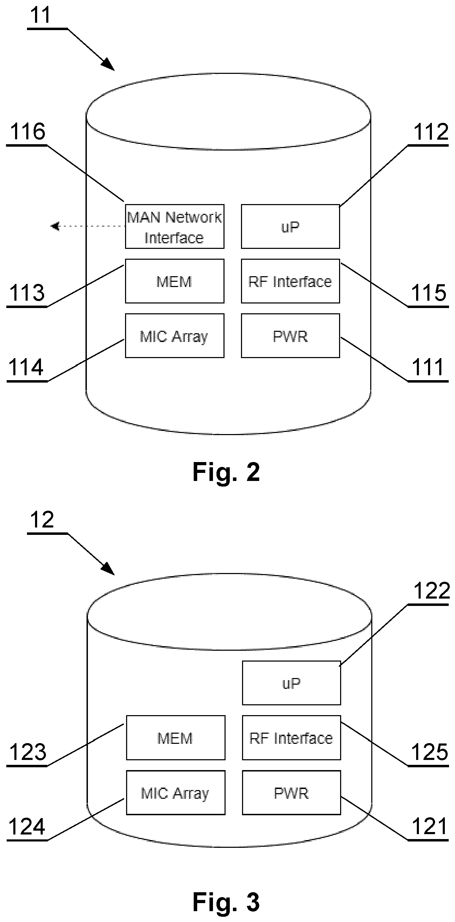

The base station 11, schematically presented in Fig. 2, comprises a battery constituting the base station power supply 111, a base station microprocessor 112 and base station memory 113. It is also provided with a base station radio interface 115 compatible with Zig Bee (IEEE 802.15.4), used for communication with satellite stations 12, as well as an external network interface 116 compatible with WIFI. The microprocessor, the memory and the interfaces use a shared base station data bus. The memory is a Flash type non-volatile memory. The base station is also provided with a base station microphone array 114. It is a circular array of the MEMS type, which comprises 16 microphones. One microphone of the array serves the function of detecting for the user's speech signal, and it is used to trigger the array in order to collect the user's speech samples at the moment when the speech signal is detected. The array is provided with its own set of analogue-to-digital converters and a speech signal sample buffer. It is connected to a shared base station data bus.

A single satellite station 12, schematically presented in Fig. 3, comprises a battery constituting the satellite station power supply 121, a satellite station microprocessor 122 and satellite station memory 123. It is also provided with a satellite station radio interface 125 compatible with Zig Bee (IEEE 802.15.4) and used for communication with the base station 11. The microprocessor, the memory and the radio interface use a shared satellite station data bus. The memory is a Flash type non-volatile memory. The base station is also provided with a satellite station microphone array 124. It is a circular array of the MEMS type, which comprises 16 microphones. One microphone of the array serves the function of detecting for the user's speech signal, and it is used to trigger the array in order to collect the user's speech samples at the moment when the speech signal is detected. The array is provided with its own set of analogue-to-digital converters and a speech signal sample buffer. It is connected to a shared satellite station data bus.

The base stations 11 and the satellite stations 12 have mutually synchronised clocks. Synchronisation proceeds via radio. This enables simultaneous collection of speech samples in all stations using temporal synchronism, and therefore determination of the relative difference in the distance of the user's speech source from all stations. With the use of multilateration, it is therefore possible to determine the relative location of the user compared to the stations.

Automatic configuration of the set of stations proceeds in a continuous manner by updating the information on their relative position each time for each recorded voice command of the user 13.

### Embodiment 2

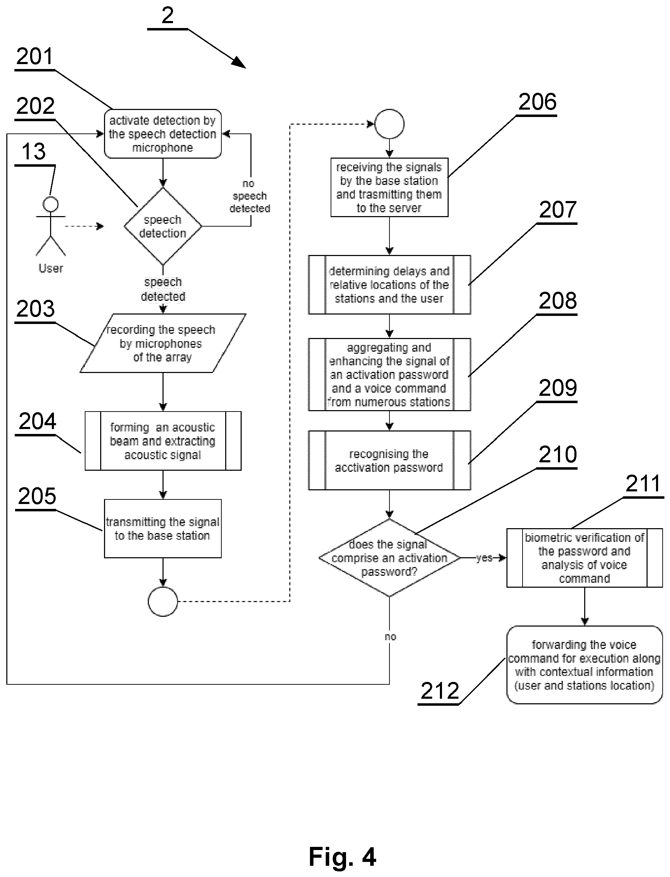

Fig. 4 presents a method 2 for voice control of an intelligent building with biometric authentication of the user 13. The method is realised by the system 1 presented in embodiment 1.

It begins with the activation 201 of detecting for a speech signal of the user 13 in the base station 11 and five satellite stations 12. Subsequently, the speech signal of the user 13 is detected 202 by means of the single microphones of all six stations 11, 12. If the speech signal is detected in the given station 11, 12, the speech signal of the user 13 is recorded 203 by means of the microphone array of each station 11, 12 which has detected the speech signal. If no signal is detected, it returns to the detection mode. The next step involves performing the formation of acoustic beams and extraction of acoustic signal 204 from the speech signals of the user 13. Subsequently, signals from the preceding step are transmitted 205 to the base station 11, if they were generated in one of the satellite stations 12; otherwise, this step is omitted. Signals from the preceding step are then received 206 and transmitted to the server of biometric voice services 15. The delays and relative locations of the stations 11, 12 and the user 13 are determined 207 on the server. This is followed by performing the aggregation, enhancement and detection 208 of signal of the activation password and the voice command based on acoustic signals from all stations 11, 12. The activation password is then recognised 209. If the activation password has been recognised correctly, it advances 210 to the next step, in which the activation password is verified in a biometric manner and the voice command 211 which follows it is analysed. If the activation password has not been recognised, the method returns to the first step 201. Subsequently, the voice command is forwarded 212 for execution along with contextual information about the location of the user 13 and the stations 11, 12.

The recording of voice commands spoken in various relative locations allows, after recording more than one speech sample in more than one location of the user 13, automatic estimation of the location of the stations 11, 12 relative to each other and creation of an estimated layout of the locations of devices in rooms, by the use of geometric algorithms and statistical algorithms. Enabling the automatic estimation of the relative location of devices based on the recorded multichannelled speech signals in the ad-hoc mode allows automatic configuration of the system 1 in terms of spatial cooperation of elements in the system 1.

Automatic configuration of the system 1 using the method 2 proceeds in a continuous manner by updating information on the relative position of the stations 11, 12 each time for each recorded voice command. This updating is based on a dedicated algorithm of multilateration using recorded time delays and changes in these delays occurring for various consecutive changing positions of the user 13. It is therefore possible in the system 1 to use information on the frequently changing position of the user, while assuming lower variability of positions of the stations themselves.

### Additional information

The system 1 can comprise more than one base station 11. Typical configurations of the system 1 comprise from 3 to 10 base stations. Each base station 11 in a typical configuration of the system 1 is connected to between 3 and 10 satellite stations 12.

The radio interfaces 115, 125 can be based on any short-range radio network operating in the ISM band or a licensed band, such as ZigBee, Bluetooth, WiFi and others. The external network interface 116 can be a wired interface, e.g. Ethernet.

Power to the stations 11, 12 can also be supplied from the power grid of the building in which the system 1 is installed.

## Claims

1. A system (1) for voice control of an intelligent building with biometric authentication of the user (13), comprising:
- at least one base station (11), comprising
• a base station power supply (111),
• a base station microprocessor (112),
• base station memory (113),
• a base station microphone array (114),
• a base station radio interface (115),
• an external network interface (116);
- at least one satellite station (12) suitable to communicate with the at least one base station (11), comprising
• a satellite station power supply (121),
• a satellite station microprocessor (122),
• satellite station memory (123),
• a satellite station microphone array (124),
• a satellite station radio interface (125);
- a server of biometric voice services (15) suitable to communicate with the at least one base station (11) via an IT network (14);
wherein each one of the microphone arrays (114, 124) comprises at least one microphone adjusted to listen for a speech signal of the user (13) in order to trigger the activation of the microphone arrays (114, 124) and subsequently record the speech signal of the user (13) by them, and all base stations (11) and satellite stations (12) have mutually synchronised clocks;
wherein the system (1) is configured to determine the relative location of the user compared to all the stations (11, 12), using simultaneous collecting of speech sample recordings of the user (13) in all stations (11, 12)
**characterised in that**
the system (1) is further configured to estimate the relative location of the stations (11, 12) based on at least two speech sample recordings of the user (13) in different locations.

2. The system according to claim 1, **characterised in that** it comprises between 3 and 10 base stations (11).

3. The system according to claim 2, **characterised in that** each base station (11) is connected to between 3 and 10 satellite stations (12).

4. A method (2) for voice control of an intelligent building with biometric authentication of the user (13), comprising the following steps:
- activation (201) of detecting for a speech signal of the user (13),
- detection (202) of the speech signal of the user (13) by means of single microphones of all stations (11, 12), and, in the case of detecting a speech signal, advancement to the next step, and, in the case of failing to detect a speech signal, return to the previous step,
- recording (203) of the speech signal of the user (13) by means of the microphone array of each station (11, 12) which has detected the speech signals in at least two different locations,
- performing the formation of acoustic beams and extraction of acoustic signal (204) from the speech signals of the user (13),
- transmitting (205) signals from the preceding step to the base station (11), provided they were generated in the satellite station (12); otherwise, this step is omitted,
- receiving (206) signals from the preceding step and transmitting them to the server of biometric voice services (15),
- determining (207) the delays and relative locations of the stations (11, 12) and the user (13),
- performing the aggregation, enhancement and detection (208) of the signal of an activation password and a voice command based on acoustic signals from all stations (11, 12),
- recognising (209) the activation password,
- if the activation password has been recognised correctly, advancing (210) to the next step; if not, returning to the first step (201) of the method,
- verifying the activation password in a biometric manner and analysing the voice command (211),
- forwarding (212) the voice command for execution along with contextual information about the location of the user (13) and the stations (11, 12).

## Patentansprüche

1. System (1) zur Sprachsteuerung eines intelligenten Gebäudes mit biometrischer Authentifizierung des Benutzers (13), welcher Folgendes umfasst:
- mindestens eine Basisstation (11), welche Folgendes umfasst
• eine Basisstationsstromversorgung (111),
• einen Basisstationsmikroprozessor (112),
• einen Basisstationsspeicher (113),
• eine Basisstationsmikrofonanordnung (114),
• eine Basisstationsfunkschnittstelle (115),
• eine externen Netzwerkschnittstelle (116);
- mindestens eine Satellitenstation (12), die zur Kommunikation mit der mindestens einer Basisstation (11) geeignet ist und Folgendes umfasst
• eine Satellitenstationsstromversorgung (121),
• einen Satellitenstationsmikroprozessor (122),
• einen Satellitenstationsspeicher (123),
• eine Satellitenstationsmikrofonanordnung (124),
• eine Satellitenstationsfunkschnittstelle (125);
- einen Server für biometrische Sprachdienste (15), der zur Kommunikation mit der mindestens einen Basisstation (11) über ein IT-Netzwerk (14) geeignet ist;
wobei jede der Mikrofonanordnungen (114, 124) mindestens ein Mikrofon umfasst, das so eingestellt ist, dass es auf ein Sprachsignal des Benutzers (13) hört, um die Aktivierung der Mikrofonanordnungen (114, 124) auszulösen und anschließend das Sprachsignal des Benutzers (13) durch diese aufzuzeichnen, und alle Basisstationen (11) und Satellitenstationen (12) gegenseitig synchronisierte Uhren haben;
wobei das System (1) so konfiguriert ist, dass es den relativen Standort des Benutzers im Vergleich zu allen Stationen (11, 12) bestimmt, indem es gleichzeitig Sprachprobenaufzeichnungen des Benutzers (13) in allen Stationen (11, 12) sammelt
**dadurch gekennzeichnet, dass**
das System (1) ferner so konfiguriert ist, dass es den relativen Standort der Stationen (11, 12) auf der Grundlage von mindestens zwei Sprachprobenaufzeichnungen des Benutzers (13) an verschiedenen Standorten schätzt.

2. System gemäß Anspruch 1, **dadurch gekennzeichnet, dass** es zwischen 3 und 10 Basisstationen (11) umfasst.

3. System gemäß Anspruch 2, **dadurch gekennzeichnet, dass** jede Basisstation (11) mit zwischen 3 und 10 Satellitenstationen (12) verbunden ist.

4. Verfahren (2) zur Sprachsteuerung eines intelligenten Gebäudes mit biometrischer Authentifizierung des Benutzers (13), das die folgenden Schritte umfasst:
- Aktivierung (201) der Erkennung eines Sprachsignals des Benutzers (13),
- Erfassung (202) des Sprachsignals des Benutzers (13) mittels einzelner Mikrofone aller Stationen (11, 12) und, im Falle der Erfassung eines Sprachsignals, Weitergehen zum nächsten Schritt und, im Falle der Nicht-Erfassung eines Sprachsignals, Zurückkehren zum vorherigen Schritt,
- Aufzeichnung (203) des Sprachsignals des Benutzers (13) mittels der Mikrofonanordnung jeder Station (11, 12), die die Sprachsignale an mindestens zwei verschiedenen Orten erkannt hat,
- Durchführung der Bildung von akustischen Strahlen und Extraktion des akustischen Signals (204) aus den Sprachsignalen des Benutzers (13),
- Übertragen (205) von Signalen aus dem vorhergehenden Schritt an die Basisstation (11), sofern diese in der Satellitenstation (12) erzeugt wurden; andernfalls wird dieser Schritt übersprungen,
- Empfangen (206) von Signalen aus dem vorhergehenden Schritt und Übertragen dieser an den Server für biometrische Sprachdienste (15),
- Bestimmen (207) der Verzögerungen und relativen Positionen der Stationen (11, 12) und des Benutzers (13),
- Durchführen der Aggregation, Verbesserung und Erkennung (208) des Signals eines Aktivierungskennworts und eines Sprachbefehls auf der Grundlage von akustischen Signalen von allen Stationen (11, 12),
- Erkennen (209) des Aktivierungskennworts,
- wenn das Aktivierungskennwort korrekt erkannt wurde, Weitergehen (210) zum nächsten Schritt; wenn nicht, Zurückkehren zum ersten Schritt (201) des Verfahrens,
- biometrisches Überprüfen des Aktivierungskennworts und Analysieren des Sprachbefehls (211),
- Weiterleiten (212) des Sprachbefehls zur Ausführung zusammen mit Kontextinformationen über den Standort des Benutzers (13) und der Stationen (11, 12).

## Revendications

1. Système (1) de commande vocale d'un bâtiment intelligent avec authentification biométrique de l'utilisateur (13), comprenant :
- au moins une station de la base (11), comprenant
• une alimentation électrique (111) de la station de la base,
• un microprocesseur (112) de la station de la base,
• mémoire (113) de la station de la base,
• un réseau de microphones (114) de la station de la base,
• une interface radio (115) de la station de la base,
• une interface (116) réseau externe ;
- au moins une station satellite (12) apte à communiquer avec au moins une station de la base (11), comprenant
• une alimentation électrique (121) de la station satellite,
• un microprocesseur (122) de la station satellite,
• mémoire (123) de la station satellite,
• un réseau de microphones (124) de la station satellite,
• une interface radio (125) de la station satellite;
- un serveur de services vocaux biométriques (15) apte à communiquer avec l'au moins une station de la base (11) par l'intermédiaire d'un réseau informatique (14) ;
dans lequel chacun des réseaux de microphones (114, 124) comprend au moins un microphone réglé pour écouter un signal de parole de l'utilisateur (13) afin de déclencher l'activation des réseaux de microphones (114, 124) et d'enregistrer ensuite le signal de parole de l'utilisateur (13), et dans lequel toutes les stations de la base (11) et les stations satellites (12) ont des horloges mutuellement synchronisées ;
dans lequel le système (1) est configuré pour déterminer la position relative de l'utilisateur par rapport à toutes les stations (11, 12), en utilisant la collecte simultanée d'enregistrements d'échantillons de parole de l'utilisateur (13) dans toutes les stations (11, 12)
se **caractérise en ce que**
le système (1) est en outre configuré pour estimer l'emplacement relatif des stations (11,12) sur la base d'au moins deux enregistrements d'échantillons vocaux de l'utilisateur (13) dans des lieux différents.

2. Système selon la revendication 1, **caractérisé en ce qu'**il comprend entre 3 et 10 stations de la base (11).

3. Système selon la revendication 2, **caractérisé en ce que** chaque station de la base (11) est connectée à entre 3 et 10 stations satellites (12).

4. Méthode (2) de commande vocale d'un bâtiment intelligent avec authentification biométrique de l'utilisateur (13), comprenant les étapes suivantes :
- activation (201) de la détection d'un signal vocal de l'utilisateur (13),
- détection (202) du signal vocal de l'utilisateur (13) au moyen des microphones individuels de toutes les stations (11, 12) et, en cas de détection d'un signal vocal, passage à l'étape suivante et, en cas d'absence de détection d'un signal vocal, retour à l'étape précédente,
- enregistrement (203) du signal vocal de l'utilisateur (13) au moyen du réseau de microphones de chaque station (11, 12) qui a détecté les signaux vocaux à au moins deux endroits différents,
- la formation de faisceaux acoustiques et l'extraction de signaux acoustiques (204) à partir des signaux vocaux de l'utilisateur (13),
- transmission (205) des signaux de l'étape précédente à la station de la base (11), à condition qu'ils aient été générés dans la station satellite (12) ; dans le cas contraire, cette étape est omise,
- réception (206) des signaux de l'étape précédente et les transmettre au serveur de services vocaux biométriques (15),
- détermination (207) des retards et les positions relatives des stations (11, 12) et de l'utilisateur (13),
- agrégation, l'amélioration et la détection (208) du signal d'un mot de passe d'activation et d'une commande vocale sur la base des signaux acoustiques provenant de toutes les stations (11, 12),
- reconnaissance (209) du mot de passe d'activation,
- si le mot de passe d'activation a été reconnu correctement, passer (210) à l'étape suivante ; dans le cas contraire, revenir à la première étape (201) de la méthode,
- vérification du mot de passe d'activation de manière biométrique et analyser la commande vocale (211),
- transmission (212) de la commande vocale pour exécution avec des informations contextuelles sur la localisation de l'utilisateur (13) et des stations (11, 12).
